# EUROPEAN PATENT APPLICATION

(11) **EP 2 618 161 A1**
(43) Date of publication of application: **24.07.2013**
(21) Application number: 11825294.9
(22) Date of filing: 20.09.2011
(51) Int. Cl.: G01N 35/02

(54) **CARTRIDGE AND AUTOMATIC ANALYSIS DEVICE**

(30) Priority: 17.09.2010 JP 2010209548
(71) Applicant: Universal Bio Research Co., Ltd., Matsudo-shi Chiba 271-0064 (JP)
(72) Inventor: TAJIMA Hideji, Matsudo-shi Chiba 271-0064 (JP)
(74) Representative: Nicholls, James Ronald
(86) International application number: PCT/JP2011/071304
(87) International publication number: WO 2012/036296

(57) **Abstract**

Provided is a reagent accommodating/measuring cartridge for mixing and reacting a test specimen with a reagent and for measuring the reaction state thereof with the transmitted light, the cartridge comprising a plurality of transmitted-light measurement chambers having different optical path lengths.

## Description

### TECHNICAL FIELD

The present invention relates to a cartridge for accommodating a sample whose absorbance or turbidity is to be determined, and to an automatic analysis device on which said cartridge is mounted to analyze the absorbance or the turbidity by photometrically measuring the sample.

### BACKGROUND ART

For example, as described in Patent Document 1, use of an automatic analysis device for analyzing a target substance contained in a specimen is becoming popular. The automatic analysis device disclosed in this document radiates light to a sample to be measured that is prepared with a test specimen and a reagent, so as to analyze a target substance such as fecal occult blood contained in the sample based on the light that has transmitted through the sample.

According to the invention described in Patent Document 1, a sample to be measured is prepared in a cuvette (mixing vessel) placed in an automatic analysis device, and light is measured at a measurement section of the cuvette to determine the absorbance or the turbidity of the sample to be measured.

### PRIOR ART DOCUMENT

### Patent Document

[Patent Document 1] Japanese Unexamined Patent Publication No. 2004-101290

### SUMMARY OF THE INVENTION

### Problem to be Solved by the Invention

However, despite the fact that a plurality of cuvettes can be placed in an automatic analysis device, all of the cuvettes have the same shape and thus the optical path lengths of the samples to be measured are uniform in all cuvettes. Therefore, in the case where the concentration of an analyte is too high, the concentration of the analyte needs to be adjusted before preparing a sample to be measured with a reagent, which may require a fair amount of time to analyze the target substance contained in the analyte. In addition, light of a certain wavelength might be difficult to transmit depending on the material of the cuvette, which may result in poor accuracy of measurement.

The present invention is made with respect to the above-described circumstances, and has an objective of providing an automatic analysis device and a cartridge therefor that are capable of shortening the time required for an analysis without adjusting the concentration of an analyte even when it is too high and that can realize highly accurate measurement.

### MEANS FOR SOLVING THE PROBLEMS

In order to achieve the above-mentioned objective, the present invention provides the followings.
(1) The present invention is a reagent accommodating/measuring cartridge for mixing and reacting a test specimen with a reagent and for measuring the reaction state thereof based on the light transmitted therethrough, wherein the reagent accommodating/measuring cartridge comprises a plurality of transmitted-light measurement chambers having different optical path lengths.

The cartridge of the present invention may further comprise a specimen-accommodating chamber for accommodating a test specimen, a chip-accommodating chamber for accommodating a pipette chip and a tool-accommodating chamber for accommodating a seal-breaking tool. Preferably, the cartridge of the present invention further comprises an identifier for recording information on the operational processes starting from mixing a test specimen with a reagent through outputting the measurement results. Furthermore, the cartridge of the present invention may comprise means for displaying reagent information that designates a chamber that gives the highest measurement effect among the plurality of transmitted-light measurement chambers. In the cartridge of the present invention, at least one of the plurality of transmitted-light measurement chambers may also serve as a reservoir for the reagent or the test specimen.

Here, in the cartridge of the present invention, the transmitted-light measurement chamber is made of, for example, cyclic polyolefin, and preferably has transmittance of 70% or higher in the range of 340-800 nm. In addition, the cartridge of the present invention is characterized in that the reagent is kept and sealed in at least one of the plurality of transmitted-light measurement chambers.

The cartridge of the present invention is also characterized in that, among the specimen-accommodating chamber, the chip-accommodating chamber, the tool-accommodating chamber and the identifier, at least the identifier is covered with a seal, and that preferably the specimen-accommodating chamber, the chip-accommodating chamber, the tool-accommodating chamber and the identifier are covered with a seal.
(2) The present invention is an automatic analysis device mounted with the above-described cartridge, the automatic analysis device comprising:
   a nozzle having a pipette chip at the tip, for withdrawing the test specimen into the pipette chip and discharging the test specimen to dispense the test specimen into the reagent chamber;
   a light source for radiating light to a mixture of the test specimen and the reagent; and
   a detector for receiving the light from the light source through the mixture;
   wherein the dispensing nozzle, the light source and the detector are integrally mounted on the same movable unit.

The automatic analysis device of the present invention may further comprise, in the same unit, a filter for adjusting the wavelength-intensity distribution of the above-mentioned light from the light source. Moreover, the automatic analysis device of the present invention is characterized in that the withdrawal and discharge sites of the dispensing nozzle are positioned along the optical axis extending between the light source and the detector.

Furthermore, the automatic analysis device of the present invention may have a mechanism for dispersing the light received with the detector, and measuring the intensity of the dispersed light at each wavelength band independently. The wavelength of the light for irradiating the mixture is preferably 340 nm-800 nm. Moreover, the automatic analysis device of the present invention may comprise a mechanism for reading out the above-mentioned operational processes from the cartridge.
(3) The present invention further provides a cartridge comprising a chamber for accommodating a tool for treating a test specimen and a reagent, and/or a chamber or a well for subjecting the test specimen and the reagent to the treatment, and an identifier for recording information on the procedure of the treatment, wherein at least the identifier is covered with a seal. In this regard, the chamber, the well and the identifier are preferably covered with a seal.
(4) Furthermore, the present invention is a method for sealing a cartridge, comprising a step of covering at least the identifier with a seal in the cartridge according to (1) or (2) above (a cartridge having an uncovered identifier).

According to the present invention, all of the chamber, the well and the identifier are preferably covered with a seal.
(5) Furthermore, the present invention is a method for automatically analyzing a test specimen, comprising a step of installing the cartridge according to (1) above into the automatic analysis device according to (2) above to measure the test specimen contained in the cartridge. Moreover, the present invention is a method for automatically analyzing a test specimen, comprising a step of installing the cartridge according to (3) above into the automatic analysis device to measure the test specimen contained in the cartridge.

### EFFECT OF THE INVENTION

According to the present invention, a highly convenient automatic analysis device and a cartridge thereof can be provided. In addition, with the automatic analysis device of the present invention, the processes starting from mixing a test specimen with a reagent through measurement can be carried out in a fully automatic manner.

### BRIEF DESCRIPTION OF THE DRAWINGS

[Figure 1A] A perspective view showing the appearance of a cartridge of the present invention looking from the upper surface.
[Figure 1B] A perspective view showing the appearance of an embodiment in which a specimen-accommodating chamber, a chip-accommodating chamber, a tool-accommodating chamber and an identifier of a cartridge of the present invention are covered with a seal that is shown to be partially peeled off.
[Figure 1C] Perspective views showing the appearance of an embodiment where a chip-accommodating chamber, a tool-accommodating chamber and an identifier of a cartridge of the present invention are covered with a seal and an embodiment where the seal has been peeled off.
[Figure 1D] Perspective views showing the appearance of an embodiment where a specimen-accommodating well and an identifier of a cartridge of the present invention are covered with a seal, an embodiment with the seal being partially peeled off and an embodiment with the seal being completely peeled off.
[Figure 1E] Perspective views showing the appearance of an embodiment where a chip-accommodating chamber, a tool-accommodating chamber and an identifier of a cartridge of the present invention are covered with a seal and embodiments with the seal being peeled off.
[Figure 2] A perspective view showing the appearance of the cartridge of Figure 1A looking from the bottom surface.
[Figure 3] A perspective view showing the appearance of a cartridge of the present invention according to an example having a single measurement chamber, looking from the bottom surface.
[Figure 4] A perspective view showing the appearance of a cartridge of the present invention according to an example having a plurality of measurement chambers, looking from the bottom surface.
[Figure 5] A longitudinal cross-sectional view of a cartridge taken along the alignment of the chambers.
[Figure 6] Longitudinal cross-sectional views of the cartridge taken along a direction perpendicular to the alignment of the chambers.
[Figure 7] A perspective view showing the appearance of an automatic analysis device installed with cartridges of the present invention.
[Figure 8] A perspective view showing an enlarged view of a part of Figure 7.
[Figure 9] A block diagram for illustrating functions of the automatic analysis device shown in Figure 7.
[Figure 10] A flowchart showing operations of the automatic analysis device shown in Figure 7.

### EMBODIMENTS FOR CARRYING OUT THE INVENTION

The present invention is a cartridge for mixing and reacting a test specimen with a reagent, for accommodating a reagent that is used for determining the reaction state in terms of transmitted light and for determining the reaction state. This cartridge is characterized by comprising a plurality of transmitted-light measurement chambers having different optical path lengths.

The present invention also relates to a cartridge comprising at least one measurement chamber that accommodates a mixture of a test specimen and a reagent and that is subjected to photometry, wherein any one of the measurement chambers has an optical path length different from those of other measurement chambers in the same cartridge comprising the former measurement chamber or from those of measurement chambers in other cartridge.

The present invention also relates to an automatic analysis device mounted with the above-described cartridge, the automatic analysis device comprising: a dispensing nozzle having a pipette chip at the tip, for withdrawing the test specimen into the pipette chip and dispensing it into the reagent chamber; a light source for radiating light to the mixture; and a detector for receiving the light from the light source through the mixture.

Furthermore, the present invention is a cartridge comprising a tool-accommodating chamber, and/or a chamber or a well for treating the test specimen and the reagent, and an identifier for recording information on the procedure of the treatment, wherein at least the identifier is covered with a seal (also referred to as sealing).

The present invention is also a method for sealing a cartridge (having an uncovered identifier) of the present invention, comprising a step of covering at least the identifier in the cartridge with a seal.

Here, a configuration for mounting a cartridge comprising a chamber and/or a well, and an identifier where at least the identifier is covered with a seal on an automatic system to allow reaction between a reagent and a specimen to measure the specimen will be described. Since the identifier records a procedure from the beginning to the end of the treatments performed by the automatic system, the system is unable to recognize the information of the identifier as long as the seal is covering the identifier. Therefore, the covering seal needs to be peeled off to expose the identifier. In other words, when an identifier-reading mechanism can recognize the identifier before running the system, it means that the seal has been peeled off. Thus, the system can confirm that the seal has been removed off once the system perceives the presence of the identifier,.

A cartridge and an analysis device of the present invention will be described with reference to the drawings.

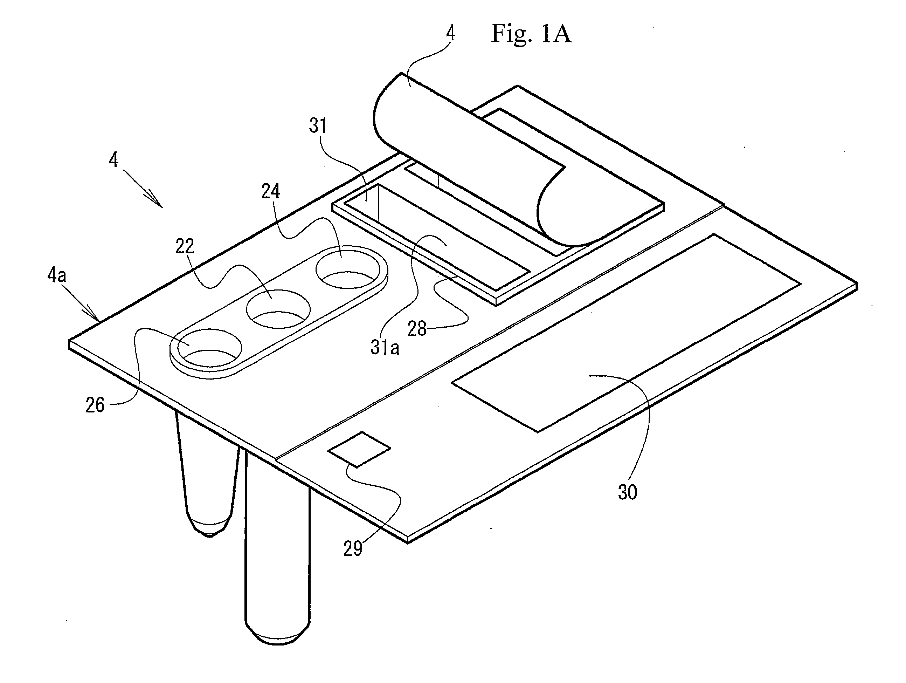

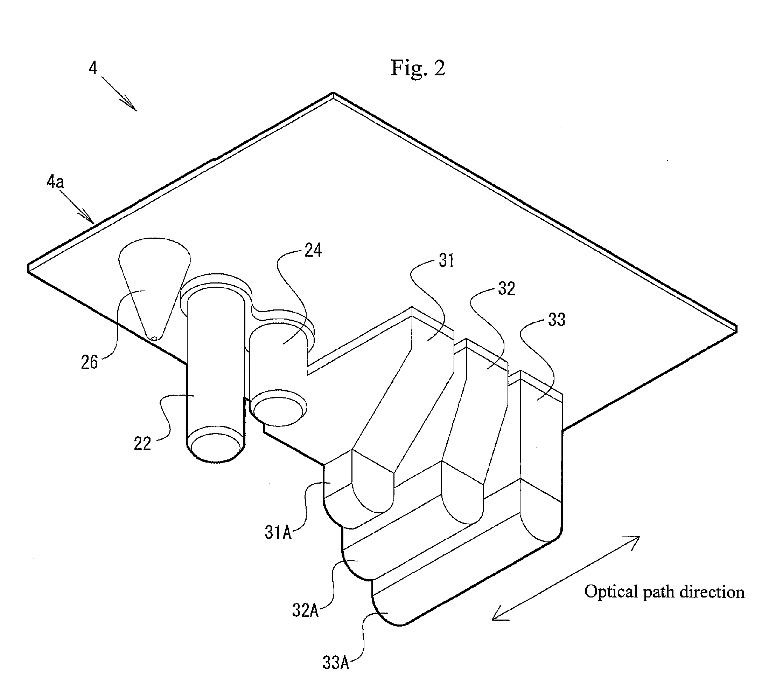

As can be appreciated from Figures 1A and 2, a cartridge 4 of the present invention is provided with a cartridge body 4a.

The cartridge body 4a is provided with at least one reagent-accommodating chamber for accommodating a reagent. According to the present invention, at least either one of a specimen-accommodating chamber for accommodating a test specimen or the reagent-accommodating chamber for accommodating a reagent can serve as a chamber for measuring the transmitted light. In this example, the reagent-accommodating chamber serves as the chamber for measuring the transmitted light.

Figures 1A and 2 show the cartridge body of an embodiment provided with three reagent-accommodating chambers 31-33. In the same figure, the reagent-accommodating chambers 31-33 has respective openings 31a-33a extending in a direction perpendicular to the alignment direction (generally horizontal direction in Figure 1A) of the chambers, where the walls vertically falling from the peripheral part of each opening form a concave at the lowermost part, i.e., measurement sections 31A-33A. The measurement sections 31A-33A are shaped such that they will have different lengths (optical path lengths) in the optical path directions perpendicular to the alignment direction of the reagent-accommodating chambers 31-33 when the reagent-accommodating chambers 31-33 are mounted on the automatic analysis device described below for determining the reaction state of the mixture of the test specimen and the reagent by photometry. In the same figure, the cross-sectional area of the measurement section 33A of the reagent-accommodating chamber 33 is generally the same as the cross-sectional area of the opening 31 a. Following this, the cross-sectional areas of the measurement sections 32A and 31A of the respective reagent-accommodating chambers 32 and 31 become smaller in this order. Thus, an optical path length of a specific reagent chamber differs from those of other reagent chambers. Accordingly, when the cartridge 4 is mounted on the automatic analysis device for photometry, the reagent-accommodating chambers 31-33 will have different optical path lengths. The walls of the reagent-accommodating chambers 32 and 33 are tapered toward the measurement sections 32A and 33A.

The cartridge body 4a is provided with a specimen-accommodating chamber 26 for accommodating a test specimen and a chip-accommodating chamber 22 for accommodating a pipette chip for withdrawing the test specimen and dispensing the specimen into the reagent chamber for mixing.

According to the present invention, in order to prevent the reagent in the reagent chamber from deteriorating or prevent the reagent from leaking outside, an airtight seal 4b can be provided for sealing the openings 31a-33a of the reagent-accommodating chambers 31-33. In the case where the airtight seal 4b is provided, a tool-accommodating chamber 24 for accommodating a seal-breaking tool can be further provided for breaking the airtight seal 4b.

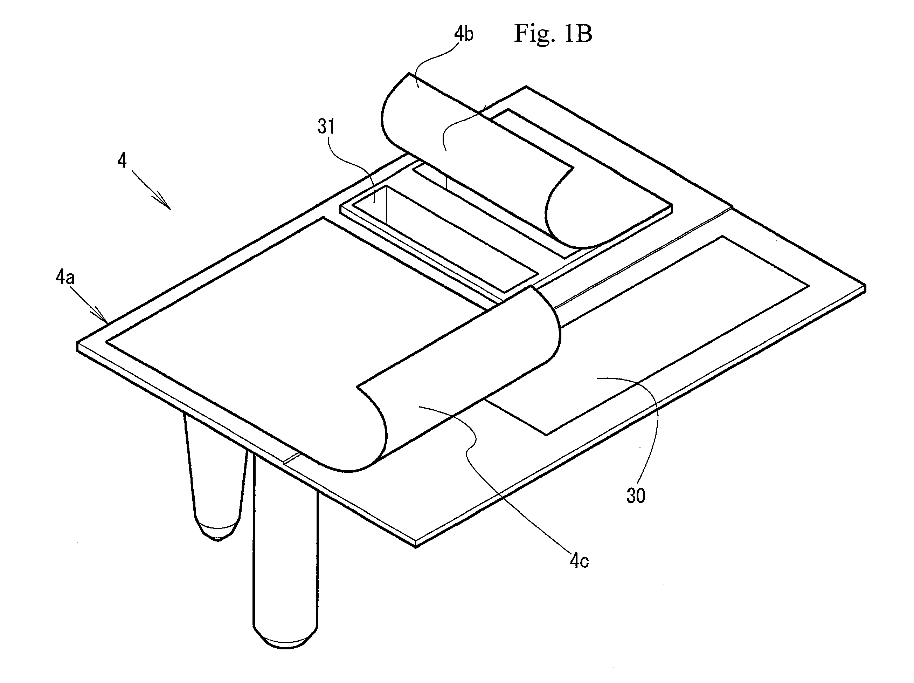

According to the present invention, a covering seal for covering at least the identifier 29 among the specimen-accommodating chamber 26, the chip-accommodating chamber 22, the tool-accommodating chamber 24 and the identifier 29 can be provided for sealing. Preferably, a covering seal 4c for covering all of the specimen-accommodating chamber 26, the chip-accommodating chamber 22, the tool-accommodating chamber 24 and the identifier 29 can be provided for sealing (Figure 1B). In this way, the chambers, the contents thereof and the identifier can be protected from troubles caused by exposures thereof (for example, external impact upon transportation or manipulation thereof or contact with impurities (dust, etc.)), and the chip or tool contained in the cartridge can be prevented from dropping out from the cartridge body 4a, for example, in the case of turning over. Covering with the covering seal 4c is particularly effective when a specimen is accommodated in the specimen-accommodating chamber 26 to be transported to an inspection institute or the like. The material of the covering seal 4c is not particularly limited, and examples may include an aluminum seal and a polymeric seal. It may also be the same material as the airtight seal 4b. When the covering seal is polymeric, the material of the cartridge described below can be used.

Here, the identifier 29 is a recorder for recording information on a series of operational processes starting from mixing a test specimen with a reagent through outputting the measurement results (as will be described below in detail).

Figure 1B is a view showing an embodiment in which the specimen-accommodating chamber 26, the chip-accommodating chamber 22, the tool-accommodating chamber 24 and the identifier 29 are covered with a single covering seal. While the covering seal 4c is pasted on the cartridge body 4a at each corner, the seal may also be pasted along all of the four sides or along opposing two sides. Each of the chambers and the identifier may be covered with individual seals or may be covered entirely with a single seal. Alternatively, all of the chambers may be covered with one seal while the identifier is covered with other seal. Figure 1B shows an embodiment in which a single covering seal 4c is pasted along two sides, i.e., one side proximal to the chambers and the other side proximal to the identifier, with the end of the seal on the identifier side is shown to be peeled off.

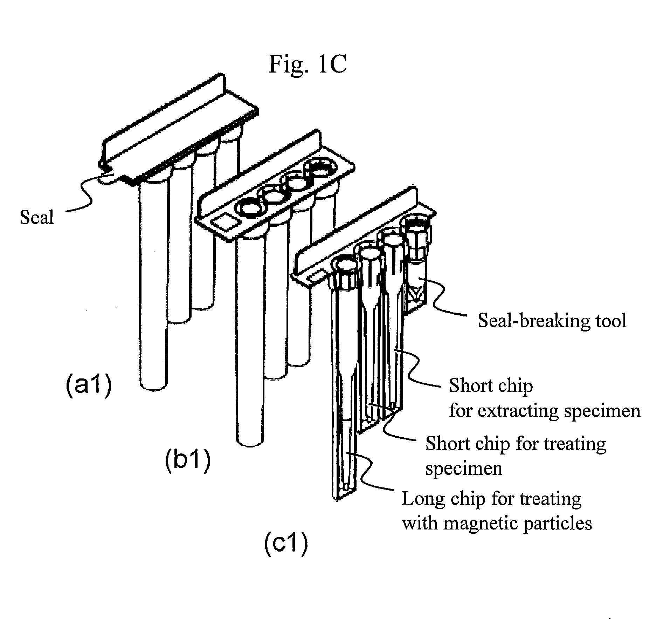

According to the present invention, not only the cartridge of the embodiment shown in Figure 1A but also cartridges of other embodiments can be provided with an identifier for recording information on a series of operational processes starting from mixing a test specimen with a reagent through outputting the measurement results, where at least this identifier can be covered with a covering seal. According to the present invention, other than the cartridges shown in Figures 1A and 1B, cartridges comprising a chamber and/or a well for undergoing extraction of a biologically-related substance or nucleic acid amplification can also be provided with an identifier and sealed as shown in Figures 1C-1E.

For example, Figure 1C shows a cartridge provided with chips that are used for extracting a biologically-related substance such as a nucleic acid or a protein or other test specimen using magnetic particles. In Figure 1C, (a1) is a view showing an embodiment in which the chips of the cartridge are covered with a single seal, (b1) is a view with the covering seal being peeled off, and (c1) is a cross-sectional view showing chips housed in the housing units. The chips housed in the chambers of the cartridge are, from the left, a long chip for treating with magnetic particles, a short chip for treating a specimen, a short chip for extracting the specimen and a seal-breaking tool. The seal-breaking tool is a tool for breaking the airtight seal (e.g., a laminate seal) that is sealing the openings of the chips. Once the seal is peeled off and the identifier is exposed, information recoded on the identifier is read out by the reading mechanism for the identifier to initiate manipulation using the nozzle provided with a pipette chip. A chip for treating with magnetic particles is described, for example, in WO99/47267, WO2008/088065, Japanese Patent No. 3115501 and the like.

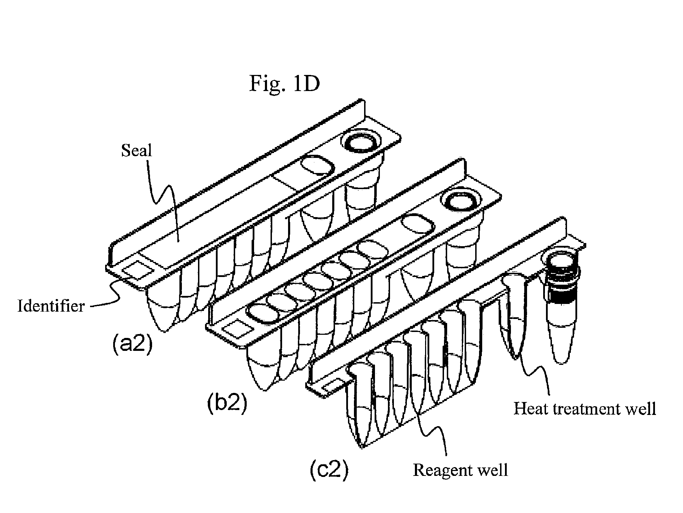

Figure 1D is a view showing a cartridge used for extracting a test specimen (e.g., DNA or protein) or for detecting a test specimen. In Figure 1D, (a2) is a view of the cartridge in which the identifier and the wells are separately covered with covering seals, where the covering seal covering the identifier has been peeled off to expose the identifier, (b2) is a view where the covering seals are completely peeled off, and (c2) is a cross-sectional view of the wells provided in the cartridge. The wells shown in Figure 1D may serve as various reagent wells, for example, a well for accommodating an analyte, a well for accommodating an extracting reagent or the like in advance for extracting DNA from the analyte, a well for accommodating a buffer, a well for accommodating a wash solution for washing the extracted DNA, a well for accommodating an eluate for collecting DNA, a well for accommodating a wash solution for washing the pipette chip, a well for accommodating a lyophilized master mix, a well for accommodating a substrate solution used for fluorescently detecting labeled DNA, and further a well used for heat treatment. The above-mentioned wells that may be used alone or that may be used in appropriate combination are aligned to form an integral unit. The openings of the wells and the identifier may be covered, for example, with a covering seal so that germs or the like do not invade inside the wells before use and that the identifier is prevented from being exposed. Once the seal is peeled off to expose the identifier, information recoded on the identifier is read out by the reading mechanism for the identifier to initiate manipulation using the nozzle provided with a pipette chip. A measurement system (measurement device) using such a cartridge is described, for example, in WO2010/074265.

Moreover, according to the present invention, a pretreatment cartridge used for removing foreign substances beforehand from the analyte to be measured can also be provided with an identifier and covered with a covering seal. An example of such "pretreatment cartridge" includes a cartridge provided with wells or chambers for accommodating, in advance, magnetic particles and a substrate solution. Such pretreatment cartridge and measurement system (measurement device) using this cartridge are also described in WO2010/074265.

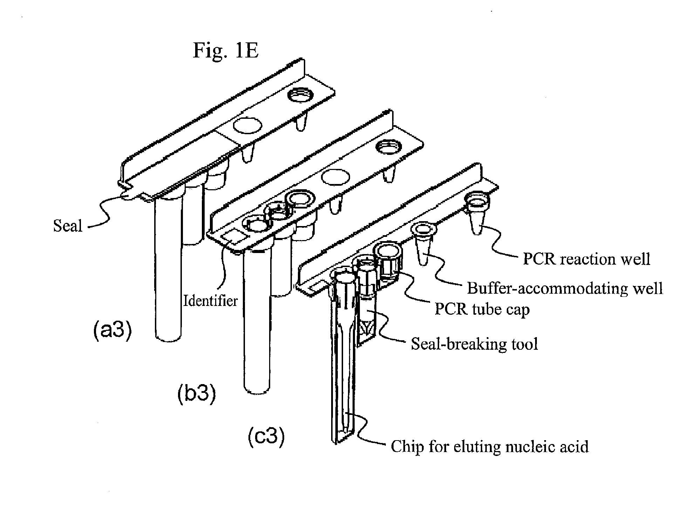

Furthermore, according to the present invention, a cartridge comprising a well for accommodating a reagent for nucleic acid amplification such as PCR and a chamber for accommodating a manipulation chip (Figure 1E) can also be provided with an identifier. In Figure 1E, (a3) is a view of a chamber for accommodating a chip for eluting nucleic acid used in PCR manipulation, a chamber for accommodating a tool for breaking an aluminum laminate seal and a chamber for accommodating a PCR tube cap, all covered with a covering seal that also covers the identifier. (b3) is a view where the covering seal has been peeled off and (c3) is a cross-sectional view showing the chips in respective chambers. A PCR system (measurement device) using such a cartridge is described, for example, in WO01/011364. An aluminum laminate seal can be used for sealing the contents of the wells, and may be used separately from the covering seal. When the contents of the wells are sealed with an aluminum laminate seal or the like, the seal can be broken with the seal-breaking tool in the same manner as described with reference to Figure 1A.

Hereinafter, for the purpose of illustration, use of the embodiment is described with reference to the cartridge shown in Figure 1A as an example herein. Of course, use of the embodiments using cartridges shown in Figures 1C-1E are known and can be carried out by those skilled in the art based on the descriptions of the above-mentioned publications or the like. Thus, according to the present invention, a method for automatically analyzing a test specimen is also provided, the method comprising installing the cartridges shown in Figures 1C-1E into an automatic analysis device to measure the test specimen contained in the cartridge.

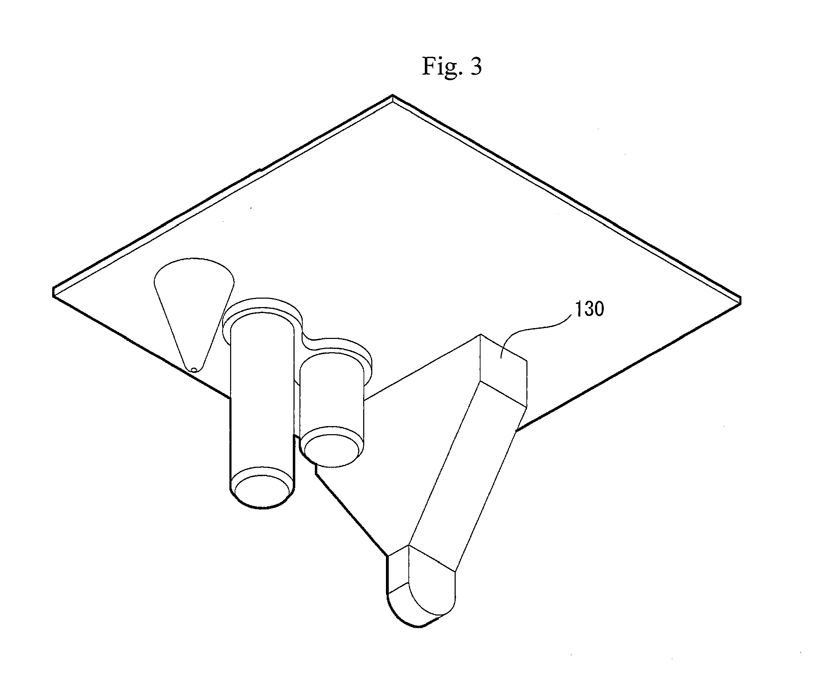

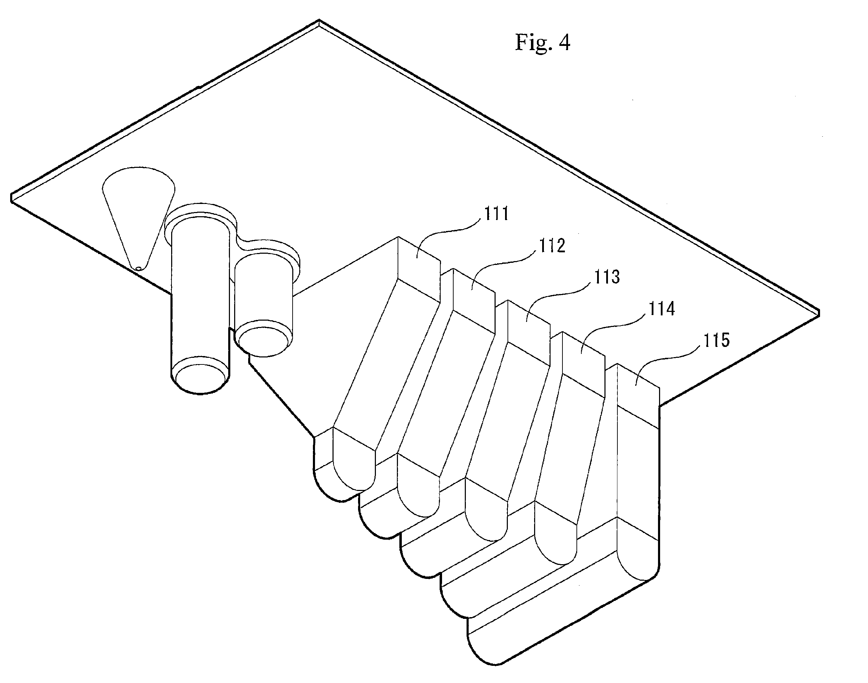

As can be appreciated from Figures 1A and 2, a plurality of reagent chambers provided may be first, second and third reagent-accommodating chambers 31, 32 and 33 having different volumes and different optical path lengths at the measurement sections. Although a cartridge comprising first to third reagent-accommodating chambers 31-33 are illustrated above, the number of chambers is not limited thereto. For example, the cartridge may comprise a single reagent chamber 130 as shown in Figure 3. In this case, the reagent chamber may have an optical path length different from that of a measurement chamber provided in other cartridge (not shown). Furthermore, as shown in Figure 4, a cartridge may comprise first to fifth reagent-accommodating chambers 111-115 each having different optical path length. The plurality of reagent-accommodating chambers may not necessarily have different optical path lengths, and some of them may have the same optical path length.

In the case where a single reagent-accommodating chamber is used, this chamber is used for mixing a reagent with a test specimen and for photometry. In the case where a plurality of reagent-accommodating chambers are used, any one of them can be selected and used as a photometry chamber.

In one embodiment of a cartridge of the present invention, as shown in Figures 1A and 2, a specimen-accommodating chamber 26, a chip-accommodating chamber 22, a tool-accommodating chamber 24 and first to third reagent-accommodating chambers 31-33 are sequentially aligned from one end (left hand side in Figure 1A) toward the other end (right hand side in the same figure) in the longitudinal direction (generally horizontal direction in the figure). The cartridge of the present invention, however, is not limited to the above-mentioned alignment order, and the order of alignment can be varied according to a purpose, for example, a treatment step.

A cartridge body 4a may have a prepacked reagent (e.g., buffer or substrate) and a display (display means) 30 (see Figure 1A) for indicating reagent information that designates a reagent-accommodating chamber that gives the highest measurement effect among the first to third reagent-accommodating chambers 31-33 so that the user can find out what kind of reagents are accommodated in the cartridge 4 based on the indication on this display 30.

In addition, an identifier 29 may be provided on the region next to the display 30 so that an automatic analysis device can identify the cartridge 4 when the cartridge 4 is mounted on the automatic analysis device as will be described below. The identifier 29 may be, for example, one that can be identified with an image sensor, for example, a QR code (registered trademark) or a bar code, or one that can be identified wirelessly, for example, RFID. This identifier 29 records, for example, information on a series of operational processes associated with the automatic analysis device, that is, mixing of a test specimen with a reagent, analysis thereof and output of the results. Accordingly, information relative to the operational processes can be read out from the cartridge.

Information relative to the operational processes may, for example, include specification information of the cartridge such as usage of the cartridge, target of analysis, layout of chambers, types and the order of use of reagents accommodated in the reagent-accommodating chambers, time and number of times of pumping for mixing the specimen with the reagent, and properties regarding light permeability of the cartridge. When the cartridge 4 needs to be identified in more detail, the content of the specification information recorded on the identifier 29 can be increased.

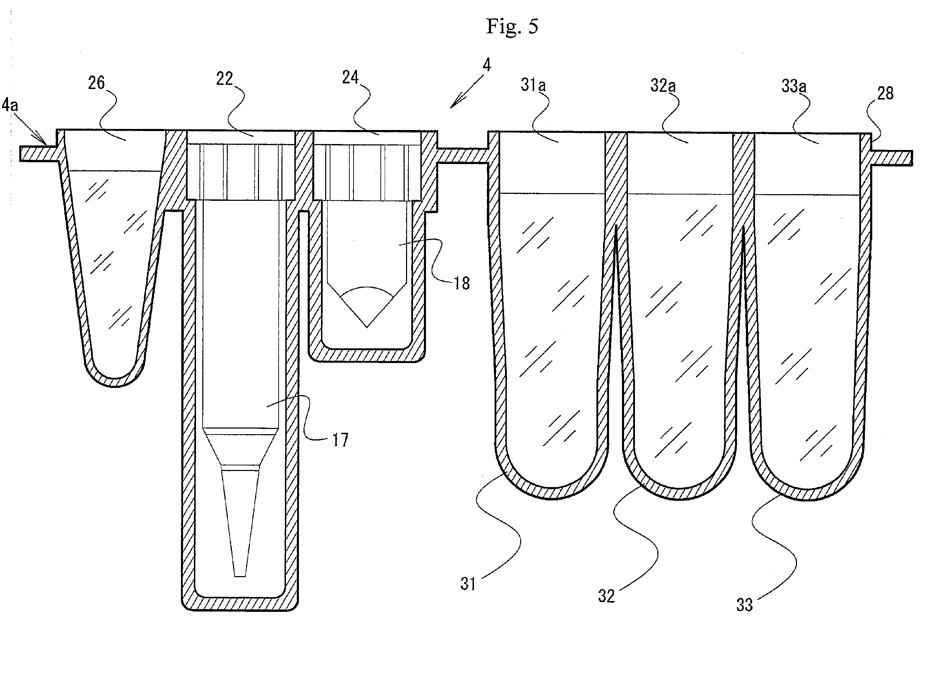

Figure 5 is a longitudinal cross-sectional view of the cartridge taken along the alignment direction of the chambers. As shown in the figure, the first to third reagent-accommodating chambers 31-33 formed in the cartridge body 4a accommodate reagents that are to be mixed with the specimen accommodated in the specimen-accommodating chamber 26 to prepare samples to be measured. A raised ridge 28 having generally uniform height is formed around and between each of the openings 31a-33a of the reagent-accommodating chambers 31-33. The airtight seal 4b is pasted onto this raised ridge 28 so as to enclose the first to third reagent-accommodating chambers 31-33. The airtight seal 4b may be a single seal that covers all of the openings 31a-33a as shown in Figure 1 or may be multiple seals that individually cover the openings 31a-33a. Similarly, a covering seal 4c may be provided to cover the specimen-accommodating chamber 26, the chip-accommodating chamber 22 and the tool-accommodating chamber 24. The covering seal 4c may be removed manually by the user upon mounting the cartridge on the automatic analysis device.

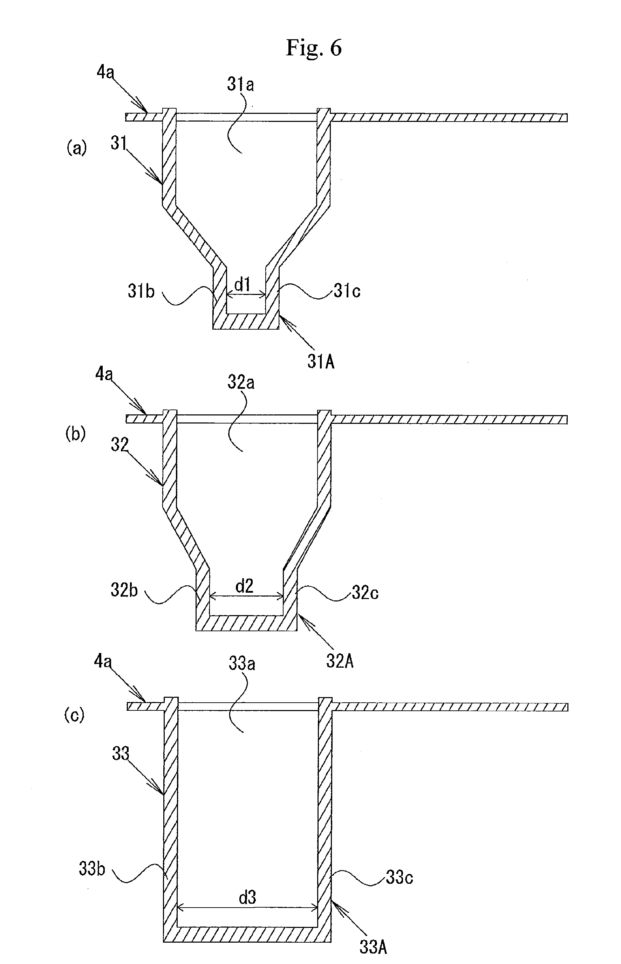

As shown in Figure 6, to each of the reagent-accommodating chambers 31-33, the specimen accommodated in the specimen-accommodating chamber 26 is added and mixed to prepare samples to be measured (mixtures of the test specimen and the reagents), and the prepared samples to be measured are irradiated with light to measure the absorbance thereof.

The cartridge comprising three reagent-accommodating chambers as shown in Figures 5 and 6 is used, for example, when the test specimen and the reagents are mixed and reacted in three steps: that is, the test specimen is mixed with the first reagent to obtain a mixture 1, which is in turn mixed with the second reagent to obtain a mixture 2, and which is further mixed with the third reagent to obtain a sample to be measured. In order to measure the absorbance, the chamber accommodating the sample to be measured, that is, the chamber in which the final mixing of the specimen with the reagent was carried out, is irradiated with light for photometry. For the purpose of photometry, since an optimal optical path length exists depending on the nature of the test specimen and the reagent, the chamber having an optical path length most appropriate for photometry is better used as the measurement chamber where the specimen is mixed with the reagent to perform photometry.

Of course, even when the number of times of mixing the test specimen with the reagents is twice or less, a cartridge comprising reagent-accommodating chambers of more than that number (three) can be used. In this case, for example, if a cartridge comprising three reagent-accommodating chambers is used to mix reagents and a specimen twice to prepare a sample to be measured, either the reagent-accommodating chamber containing the sample to be measured may be used for photometry, or the remaining reagent-accommodating chamber (empty chamber) may be used exclusively for photometry.

As shown in Figure 6(a), the measurement section 31A of the first reagent-accommodating chamber 31 is provided with an incident site 31b for passing light from outside to inside the chamber 31 and outgoing site 31c for passing light from inside to outside the chamber 31. The inner wall of the incident site 31 a and the inner wall of the outgoing site 31c are separated from each other by distance d1, as a result of which the first reagent-accommodating chamber 31 provides an optical path length d1 to the sample to be measured prepared in the same chamber.

Similarly, as shown in Figure 6(b), the measurement section 32A of the second reagent-accommodating chamber 32 is provided with an incident site 32b for passing light from outside to inside the chamber 32 and outgoing site 32c for passing light from inside to outside the chamber 32. The inner wall of the incident site 32a and the inner wall of the outgoing site 32c are separated from each other by distance d2, as a result of which the second reagent-accommodating chamber 32 provides an optical path length d2 that is longer than the optical path length d1 to the sample to be measured prepared in the same chamber.

Similarly, as shown in Figure 6(c), the measurement section 33A of the third reagent-accommodating chamber 33 is provided with an incident site 33b for passing light from outside to inside the chamber 33 and outgoing site 33c for passing light from inside to outside the chamber 33. The inner wall of the incident site 33a and the inner wall of the outgoing site 33c are separated from each other by distance d3, as a result of which the third reagent-accommodating chamber 33 provides an optical path length d3 that is longer than the optical path length d2 to the sample to be measured prepared in the same chamber.

By preparing chambers in which the reagent accommodating units are shaped to have different optical path lengths as described above, a chamber having an optimal optical path length depending on the nature of the test specimen or the reagent can be made as the measurement chamber, and thus reagent storage, mixing and photometry can be carried out appropriately according to the measurement purpose.

A cartridge used with the present invention is made of a polymeric material. For example, the cartridge body 4a is preferably formed as an integral unit, for example, from a material with good light permeability such as a transparent polymeric material. The light permeability of the measurement chamber is such that it has transmittance of, for example, 70% or higher in a range of 340-800 nm.

Examples of such a polymeric material include polyethylene, polyolefins such as ethylene-α-olefin copolymers, polystyrene, polycarbonate, polyesters such as polyethylene terephthalate and polybutylene terephthalate, polyacetal, polyamide, polyphenylene ether, polyether sulfone, cyclic polyolefin, polysulfone, ethylene-vinyl acetate copolymers, polyvinyl chloride, polyphenylene sulfide, fluorine resin and acrylic resin. Preferably, cyclic polyolefin is used.

For production of a homopolymer or a copolymer using a cyclic olefin monomer, various additives may be used.

Examples of monomers that constitute cyclic polyolefin include a monocyclic olefin monomer and a polycyclic olefin monomer with two or more rings.

Furthermore, examples of cyclic polyolefins include a ring-opened polymer of a cyclic olefin monomer, a hydrogenated product of said ring-opened polymer, an addition polymer of a cyclic olefin monomer and an addition copolymer of a cyclic olefin monomer and other monomer that can go through copolymerization therewith. Above all, a hydrogenated product of a ring-opened polymer of a cyclic olefin monomer is favorable in terms of heat resistance, mechanical strength and the like. Moreover, a cyclic olefin monomer consisting only of hydrocarbon is preferable because a polymer with lower adsorptive property can be obtained.

Examples of a cyclic olefin monomer include, but not limited to, norbornene monomers and monocyclic olefin monomers. A norbornene monomer may be any monomer having a unit derived from a norbornene structure in the monomer structure.

Moreover, these norbornene monomers may have a hydrocarbon group with a carbon number of 1-3. Specific examples of monocyclic olefin monomers include cyclohexene, cycloheptene and cyclooctene. These cyclic olefin monomers may be used alone or two or more types of them may be used together. A ring-opened polymer of a cyclic olefin monomer can be obtained by polymerizing a cyclic olefin monomer through metathesis reaction in the presence of a known ring-opening catalyst. In addition, a hydrogenated product of a ring-opened polymer of a cyclic olefin monomer can be obtained by hydrogenating a ring-opened polymer through hydrogenation with a known hydrogenation catalyst.

Examples of other monomers that can go through addition copolymerization with a cyclic olefin monomer include α-olefins with a carbon number of 2-20 such as ethylene, propylene, 1-butene and 1-hexene. These α-olefins may be used alone or two or more types of them may be used together.

An addition (co)polymer of a cyclic olefin monomer can be obtained by polymerization using a known catalyst of a titanium or zirconium compound and an organic aluminum compound.

Examples of monocyclic olefin monomers used for producing a homopolymer or a copolymer of cyclic olefin include monocyclic olefin monomers such as cyclopentene, cyclopentadiene, cyclohexene, methylcyclohexene and cyclooctene, lower alkyl derivatives having a lower alkyl group such as one to three methyl groups, ethyl groups or the like, and acrylate derivatives.

Examples of polycyclic olefin monomers include dicyclopentadiene, 2,3-dihydrocyclopentadiene, bicyclo[2,2,1]-hepto-2-ene(norbornene) and derivatives thereof, tricyclo[4,3,0,1^{2,5}]deca-3,7-diene(dicyclopentadiene), 7,8-benzotricyclo[4,3,0,1^{2,5}]deca-3-ene(methanotetrahydrofluorene), tetracyclo[4,4,0,1^{2,5},1^{7,10}]dodeca-3-ene(tetracyclododecene), tricyclo[4,3,0,1^{2,5}]-3-decene and derivatives thereof, tetracyclo[4,4,0,1^{2,5}]-3-undecene and derivatives thereof, tetracyclo[4,4,0,1^{2,5},1^{7,10}]-3-dodecene and derivatives thereof, pentacyclo[6,5,1, 1^{3,6},0^{2,7},0^{9,13}]-4-pentadecene and derivatives thereof, pentacyclo[7,4,0, 1^{2,5},0,0^{8,13},1^{9,12}]-3-pentadecene and derivatives thereof, and hexacyclo[6,6,1,1^{3,6}, 1^{10,13},0^{2,7},0^{9,14}]-4-heptadecene and derivatives thereof.

Examples of norbornene derivatives include 5-methyl-bicyclo[2,2,1]-hepto-2-ene, 5-methoxy-bicyclo[2,2,1]-hepto-2-ene, 5-ethylidene-bicyclo[2,2,1]-hepto-2-ene, 5-phenyl-bicyclo[2,2,1]-hepto-2-ene, and 6-methoxycarbonyl-bicyclo[2,2,1]-hepto-2-ene.

Examples of derivatives of tricyclo[4,3,0,1^{2,5}]-3-decene include 2-methyl-tricyclo[4,3,0,1^{2,5}]-3-decene and 5-methyl-tricyclo[4,3,0,1^{2,5}]-3-decene. An example of derivatives of tetracyclo[4,4,0,1^{2,5}]-3-undecene includes 10-methyl-tetracyclo[4,4,0,1^{2,5}]-3-undecene.

Examples of derivatives of tetracyclo[4,4,0,1^{2,5},1^{7,10}]-3-dodecene include 8-ethylidene-tetracyclo[4,4,0,1^{2,5},1^{7,10}]-3-dodecene, 8-methyl-tetracyclo[4,4,0,1^{2,5},1^{7,10}]-3-dodecene, 9-methyl-8-methoxycarbonyl-tetracyclo[4,4,0,1^{2,5},1^{7,10}]-3-dodecene and 5,10-dimethyl-tetracyclo[4,4,0,1^{2,5}1,^{7,10}]-3-dodecene.

Examples of derivatives of hexacyclo[6,6,1,1^{3,6},1^{10,13},0^{2,7},0^{9,14}]-4-heptadecene include 12-methyl-hexacyclo[6,6,1,1^{3,6},1^{10,13},0^{2,7},0^{9,14}]-4-heptadecene and 1,6-dimethyl-hexacyclo[6,6,1,1^{3,6},1^{10,13},0^{2,7},0^{9,14}]-4-heptadecene.

An example of a cyclic polyolefin is a homopolymer of at least one type of cyclic olefin monomers or a copolymer of at least one type of cyclic olefin monomers and at least one type of other monomers (e.g., ethylene, propylene, 4-methylpentene-1, cyclopentene, cyclooctene, butadiene, isoprene or styrene). This homopolymer or copolymer can be obtained by polymerizing the above-mentioned monomer with a known catalyst made of a vanadium compound soluble in a hydrocarbon solvent and an organic aluminum compound or the like as a catalyst.

Another example of cyclic polyolefin is a single ring-opened polymer or copolymer of the above-mentioned monomer, which can be obtained by single polymerization or copolymerization of the above-mentioned monomer by using, for example, a known catalyst such as: (1) a catalyst made of a halide of a platinum group metal such as ruthenium, rhodium, palladium, osmium or platinum, nitrate or the like and a reductant; or (2) a catalyst made of a compound of a transition metal such as titanium, molybdenum, tungsten or the like, and an organic metal compound of a periodic table I-IV group metal such as an organic aluminum compound or an organic tin compound.

When the obtained homopolymer or copolymer has an unsaturated bond, this homopolymer or copolymer is hydrogenated with a known hydrogenation catalyst. Examples of catalysts for hydrogenation include: (1) a Ziegler homogeneous catalyst made of an organic salt of titanium, cobalt, nickel or the like and an organic metal compound of lithium, aluminum or the like; (2) a supported catalyst where a platinum group metal such as palladium or ruthenium is supported by a carrier such as carbon or alumina; and (3) a complex catalyst of the above-mentioned platinum group metal.

The above-described hydrogenated homopolymer or copolymer include a single ring-opened polymer or copolymer of a polycyclic saturated hydrocarbon compound with two or more rings which may have a substituent having a polymerizable double bond.

Examples of such polycyclic saturated hydrocarbon compounds include tricycle[4,3,0,1^{2,5}]-decane, bis(allyloxycarboxy)-tricyclo[4,3,0,1^{2,5}]-decane, bis(methacryloxy) -tricyclo[4,3,0,1^{2,5}]-decane, and bis(acryloxy)-tricyclo[4,3,0,1^{2,5}]-decane.

A cartridge of the present invention may comprise a cartridge body of a laminated structure having a plurality of different layers. For example, a cartridge body of a cartridge of the present invention may be formed to have a first layer made of a copolymer of cyclic olefin monomer and other monomer such as ethylene, and a second layer made of a cyclic polyolefin obtained by polymerizing only a cyclic olefin monomer.

When the cartridge body has a laminated structure, it may be formed, for example, by a double injection technique.

Next, an automatic analysis device onto which a cartridge of the present invention is mounted will be described.

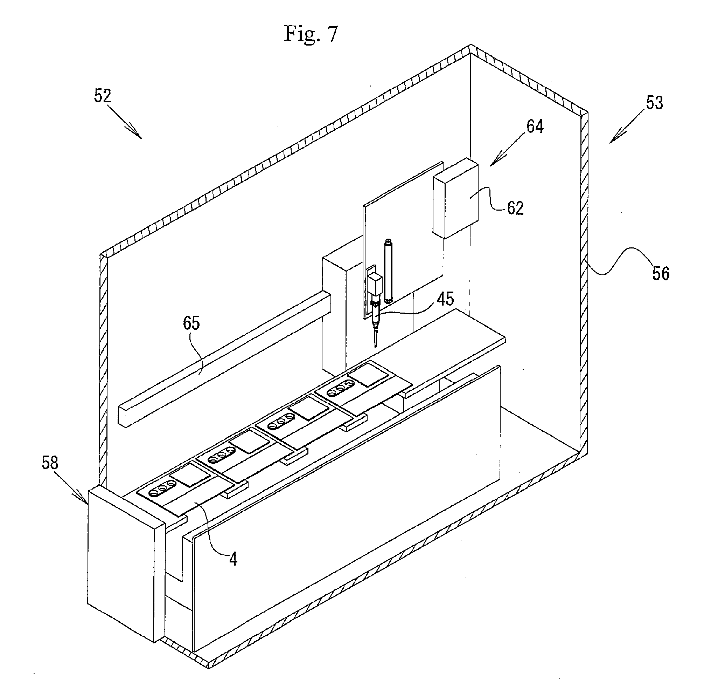

Figure 7 is a perspective view showing the appearance of an automatic analysis device of an embodiment mounted with four cartridges.

In the example shown in Figure 7, an automatic analysis device 52 comprises a device body 53 which is provided with a chassis 56, a cartridge tray 58 attached to the chassis 56 for holding cartridges 4 of the present invention, and a multi-unit 64 that can move in the longitudinal direction of the cartridge tray 58. The chassis 56 is provided with a horizontally secured transfer guide 65 for guiding the movement of the multi-unit 64.

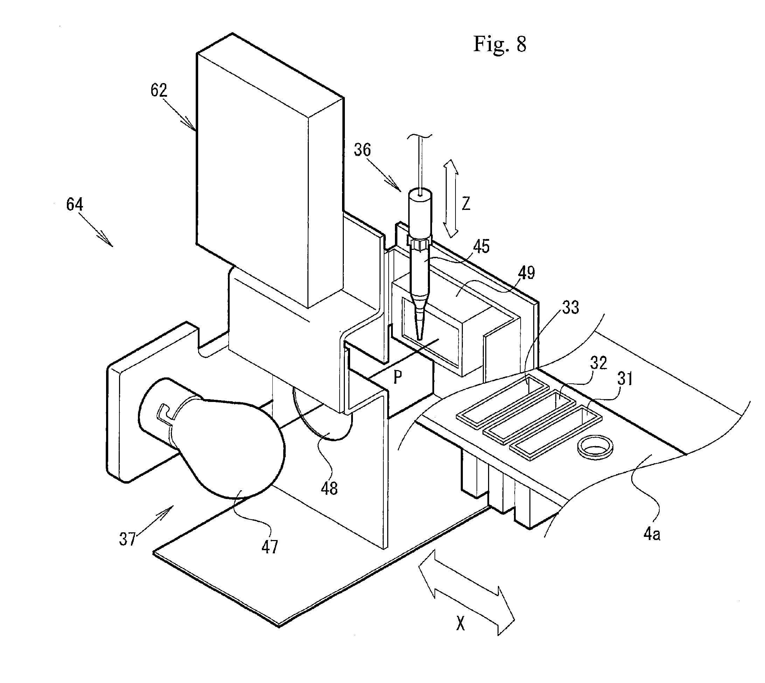

As shown in Figure 8, the multi-unit 64 comprises, as an integral unit, a preparation mechanism 36 for preparing a sample to be measured, a photometry mechanism 37 for radiating light to the sample to be measured and measuring the light that transmitted through the sample, a movement controller 62 and the like. Specifically, the multi-unit 64 is mounted on an integrally movable unit with a dispensing nozzle, a light source, a filter and a detector as an integral unit. The preparation mechanism 36 is provided with a nozzle 45 having a pipette chip at the tip for withdrawing a test specimen accommodated in the specimen-accommodating chamber 26 of the cartridge into the pipette chip and dispensing it into a reagent chamber, a pump for controlling the withdrawal and discharge by the nozzle 45, a nozzle guide for controlling the movement of the nozzle 45 in the vertical direction, and the like (the pump and the nozzle guide are not shown the figure). The movement controller 62 allows the multi-unit 64 to move freely along the transfer guide 65 in the X-direction so that the nozzle 45 can be placed above each chamber.

The photometry mechanism 37 is provided with a light source 47 and a light receiving section (detector) 49, and may also be provided with a filter 48 for adjusting the wavelength-intensity distribution of the light from the light source 47. The light receiving section 49 is provided with a spectroscopic element for dispersing light that has transmitted through the sample to be measured, a light-sensitive sensor for receiving the light dispersed by the spectroscopic element as will be described below, and the like.

The light source 47 is placed to oppose the light receiving section 49 but it is preferable to provide a filter 48 between the light source 47 and the light receiving section 49. Upon photometry, light is radiated on the reagent-accommodating chamber (any one of the incident sites 31b-33b) containing the sample to be measured. As the light source 47, for example, a filament bulb such as a tungsten lamp or a halogen lamp or a light-emitting diode can be utilized. The wavelength-intensity distribution of light from the light source 47 is adjusted with the filter 48 such that light with a wavelength (spectrum) of, for example, 340-800 nm, preferably 340 nm-700 nm can be radiated on the sample to be measured. "Wavelength-intensity distribution" refers to a light spectrum that represents light intensity for each wavelength component of the light from the light source including various wavelengths. By providing this filter 48, a light spectrum from the light source 47 can be adjusted. Exemplary embodiments of spectrum adjustment include providing an even spectrum distribution of light from the light source 47, intensify or weaken light of a specific wavelength region, and filtering out light of an unnecessary wavelength region.

Furthermore, the light receiving section 49 opposes the outgoing sites 31c-33c of the reagent-accommodating chambers 31-33 upon photometry to receive light from the outgoing sites 31c-33c. The light received by the light receiving section 49 is dispersed by the spectroscopic element, and the dispersed light is received by the light-sensitive sensor as will be described later.

The photometry mechanism 37 is positioned with respect to the cartridge tray 58 such that the measurement sections 31A-33A of the reagent-accommodating chambers 31-33 of the cartridge 4 mounted on the cartridge tray 58 will stay on the optical path P extending from the light source 47 to the light receiving section 49. The nozzle 45 is positioned with respect to the photometry mechanism 37 such that the line extending from the movement direction Z of the nozzle 45 stays on the optical path P extending from the light source 47 to the light receiving section 49 (Figure 8). The integral structure of the nozzle, the light source, the filter and the detector allows the withdrawal and discharge sites of the dispensing nozzle to be positioned above the optical axis extending between the light source and the detector, and allows manipulations (withdrawal and discharge) with the nozzle, for example, mixing of the reagent and the specimen as well as photometry, to be carried out on the same axis. Accordingly, after the nozzle 45 has dispensed the test specimen to prepare the sample to be measured, photometry can immediately be initiated without the need of moving the multi-unit 64 in the X-direction. Alternatively, photometry can be carried out simultaneously with the manipulation by the nozzle 45.

The cartridge tray 58 retaining the plurality of cartridges 4 in one or more rows can be mounted within the chassis 56. Although Figure 7 shows an example of a configuration where four cartridges 4 are arranged in one row, the number of cartridges is not limited to four and the rows can also be of any number such as two or more rows.
The nozzle 45 can freely move in the alignment direction of the cartridges 4 along the transfer guide 65 provided in the device body 53. Since the cartridge tray 58 retains a plurality of cartridges 4, multiple analyses can sequentially be carried out with different cartridges. An analysis may be such that a plurality of measurement items are carried out for a single specimen or that the same measurement item is carried out for specimens from a number of subjects. Examples of measurement items for a test specimen include, but not limited to, immunological test items by utilizing latex agglutination, biochemical test items such as NAD or NADH, clinical test items such as GOT or GPT, or environmental test items such as components in sewerage or atmosphere (NO, mercury, etc.).

The nozzle 45 can be provided, in addition to the pipette chip 17 for withdrawing/discharging a specimen or a reagent, with a seal-breaking tool 18 for breaking the airtight seal 4b. The pipette chip 17 and the seal-breaking tool 18 may appropriately be attached and detached by a chip mount controller of the device body 2 as will be described later.

The photometry mechanism 37 is provided with a light source 47, a filter 48 for cutting heat ray as well as light in an unwanted wavelength range contained in the light from the light source and for adjusting the wavelength-intensity distribution of light in the visible range, and a light receiving section 49. Light for measuring absorbance is radiated onto any one of the incident sites 31b-33b of the first to third reagent-accommodating chambers 31-33 in any of the cartridges 4, while light coming out from the outgoing site 31 c-33c opposing the incident site to which the light has been irradiated is measured. The light receiving section 49 is provided with a spectroscopic element for dispersing light transmitted through the sample to be measured, a light-sensitive sensor for receiving light dispersed by the spectroscopic element, and the like.

Preferably, the light source 47 is placed to oppose the light receiving section 49 via the filter 48 and radiate light to any one of incident sites 31b-33b of the reagent-accommodating chambers 31-33 upon photometry. In addition, the light receiving section 49 opposes the outgoing site that corresponds to the irradiated incident site of the reagent-accommodating chambers 31-33 so as to receive light from any one of the outgoing sites 31c-33c.

The analysis device 52 can analyze the target substance in the specimen based on the measured intensity signal from the light receiving section 49. In this way, since the preparation mechanism 36 and the photometry mechanism 37 are integrated, processes starting from preparation of a sample to be measured through photometry can be performed sequentially. At the same time, since the preparation mechanism 36 and the photometry mechanism 37 are integrated and can be moved along the alignment of the chambers, drive mechanisms for them can be combined, rendering the size of the automatic analysis device smaller.

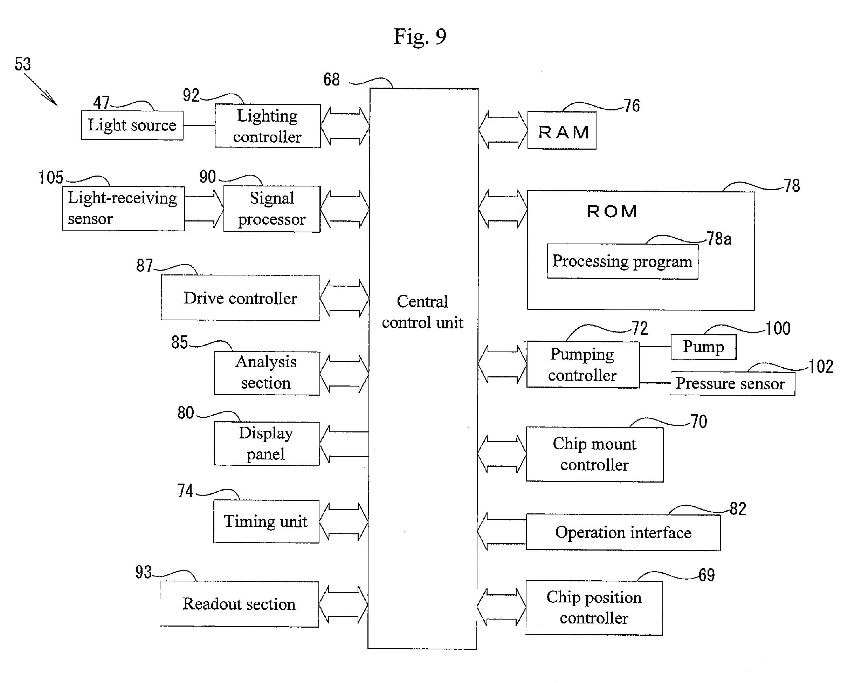

As can be appreciated from Figure 9, the device body 53 is provided with a central control unit 68, a chip position controller 69, a chip mount controller 70, a pumping controller 72, a timing unit 74, RAM 76, ROM 78, a display panel 80, an operation interface 82, an analysis section 85, a drive controller 87, a signal processor 90, a lighting controller 92, a readout section 93 and the like.

The readout section 93 reads out the specification information recorded on the identifier 29 of the cartridge 4. For example, the identifier 29 may be a two-dimensional bar code such as a QR code (registered trademark), in which case the readout section 93 is provided with a corresponding image sensor. The image sensor generates an image signal based on the pattern of the two-dimensional bar code, and the readout section 93 generates specification information based on this image signal and sends it to the central control unit 68.

By providing different two-dimensional bar codes for different types of cartridges 4, specification information that varies by the types of the cartridges 4 is output from the readout section 93, so that different processing embodiments are carried out for different cartridges 4.

ROM 78 stores various control programs for the automatic analysis device 52 as well as a processing program 78a that is readout based on the specification information from the readout section 93 or by manual operation by the user. The processing program 78a may be, for example, multiple programs that are prepared in advance such that a distinct processing program is read out according to the information input manually by the user or the specification information that is automatically read out. These multiple processing programs 78a are stored as a data table in ROM 78. For example, since different processing programs are assigned to the cartridge provided with a single, two, three, four or five reagent-accommodating chambers while different processing programs are assigned to different analysis targets A, B, C, D and E, ROM 78 can store 25 processing programs of different processing embodiments.

Accordingly, since ROM 78 stores a data table for a suitable processing program to be read out based on the specification information, distinct processing program 78a can appropriately be read out from ROM 78 and used according to the specification information. Thus, operation can be carried out precisely for each of the cartridges 4 having different specifications. The processing program 78a includes basic operation instructions for each section of the automatic analysis device 52. The automatic analysis device 52 is activated based on this processing program 78a so as to appropriately operate the cartridge 4.

Furthermore, according to the operation mode selected by the user via the operation interface 82, a control program is loaded from ROM 78 into RAM 76. Based on this RAM-loaded control program, the central control unit 68 controls each part of the automatic analysis device 52.

In the case where the user is to manually designate the chamber for measuring the transmitted light, it is carried out via this operation interface 82. The display 30 (see Figure 1) of the cartridge 4 indicates information on the prepacked reagents, and, based on that indication, the user can input information necessary for the analysis of the test specimen by manipulating the operation interface 82.

The display panel 80 indicates items that needs to be presented to the user. For example, the number of times of pumping upon mixing an analyte and a reagent, change in the flow rate upon pumping, amounts of withdrawal and discharge, change in the movement speed of the pipette chip 17, various information read out from the identifier 29 of the cartridge 4 and else are indicated on the display panel 80 so that the user can confirm them on this display. If any of the various settings needs to be changed, they may be changed by operating the operation interface 82.

The timing unit 74 counts time according to the program read out from ROM 78. Time is counted, for example, upon pumping, or upon mixing an analyte with a reagent to prepare a sample to be measured, by which amount of time required for each step, for example, the reaction time between the analyte and the reagent, can accurately be counted.

The chip mount controller 70 attaches the pipette chip 17 or the seal-breaking tool 18 to the nozzle 45 and detaches them from the nozzle 45. The chip mount controller 65 grasps the pipette chip 17 or the seal-breaking tool 18 so that as the nozzle is vertically lifted, the pipette chip 17 or the seal-breaking tool 18 are detached from the nozzle 45.

The nozzle 45 moves in the alignment direction of the chambers to be positioned above the chamber accommodating a new pipette chip 17 or a new seal-breaking tool 18. Once the nozzle 45 is positioned, the nozzle 45 vertically declines so that the pipette chip 17 or the seal-breaking tool 18 are newly attached to the nozzle 45.

The pumping controller 72 is provided with a pump 100 and a pressure sensor 102 so as to control the withdrawal and discharge of the liquid with the nozzle 45 and the pipette chip 17 attached to the nozzle 45. The pump 100 is provided with a cylindrically-formed housing, a piston that is movably fit into this housing and a motor for driving this piston, where the inside of the housing communicates with the aperture of the nozzle. The movement of the piston is controlled, for example, with a servomotor, and driving of the servomotor is controlled by the drive control signal from the pumping controller 72. As the piston activates, a liquid can be withdrawn or discharged via the aperture of the nozzle 45.

A pressure sensor 102 that detects pressure can be provided inside the aperture of the nozzle 45. The pressure sensor 102 sends a pressure signal to the pumping controller 72. The pumping controller 72 monitors pressure based on the pressure signal from this pressure sensor 102. By having this configuration, for example, when the tip of the pipette chip 17 is immersed in an analyte in a well, a pressure detected by the pumping controller 72 will exceed the predetermined threshold, upon which a drive control signal is sent to the servomotor. The pressure sensor 102 also constantly sends pressure signals to the pumping controller 72 during withdrawing or discharging of the analyte, by which the pumping controller 72 can control the driving of the servomotor with high accuracy and can monitor increase and decrease in the pressure for withdrawing or discharging the analyte so as to ensure that withdrawal/discharge is conducted within a predetermined range.

A drive controller 87 controls an actuator for moving the nozzle 45 along the transfer guide 65, by receiving a command from the central control unit 68 to control the driving of the actuator. As the actuator, for example, a stepping motor or a servomotor can be used, with which the position of the nozzle 45 can accurately controlled within the extending distance of the transfer guide 65.

The photometry mechanism 37 (see Figure 8) is provided with the light source 47, whose on and off is controlled by the lighting controller 92.

A light-sensitive sensor 105 provided in the photometry mechanism 37 receives light transmitted from the sample to be measured that has been dispersed with the spectroscopic element and outputs the measured intensity signal. The light-sensitive sensor 105 may be a semiconductor sensor, a photomultiplier or the like. The spectroscopic element can divide the transmitted light from the sample to be measured, for example, into 12 wavelength ranges, while twelve individual light-sensitive sensors 105 are independently provided so as to receive each of the transmitted light dispersed into 12 wavelength ranges. Thus, the photometry mechanism 37 can measure the intensity of the dispersed light at each wavelength band independently. Each of the light-sensitive sensors 105 that received the dispersed light outputs an analog signal of the measured intensity according to the received dispersed light. A CCD sensor or a CMOS sensor can be used as a semiconductor sensor to downsize the light receiving section 49. Although the transmitted light has been divided into 12 wavelength ranges by the spectroscopic element in the above-described case, the number of division is, of course, not limited to this number and may be altered as appropriate.

A signal processor 90 is provided for each light-sensitive sensor 105, with an amplifier (amplification equipment) and an A/D conversion circuit. The analog signal of the measured intensity from the light-sensitive sensor 105 is sent to the signal processor 90 and amplified by the amplifier. The amplified measured intensity signal is digitized with the A/D conversion circuit to generate measured intensity data for each of the dispersed light. The generated measured intensity data is sent to the analysis section 85.

The analysis section 85 calculates absorbance or turbidity based on the measured intensity data generated by the signal processor 90 to analyze the sample to be measured. An analysis of the sample may be, for example, determination of the amount of a target substance contained in the sample to be measured.

In the case of determining the amount of the target substance, the analysis section 85 determines the intensity of the dispersed light at each wavelength band based on the measured intensity data, and the determined intensity of the dispersed light can be, for example, checked against a calibration curve, thereby precisely calculating the amount of the target substance.

The analysis section 85 can also perform biochemical examination on a biological substance contained in an analyte, but the target of analysis is not limited thereto, and may be any light-permeable liquid including sewerage.

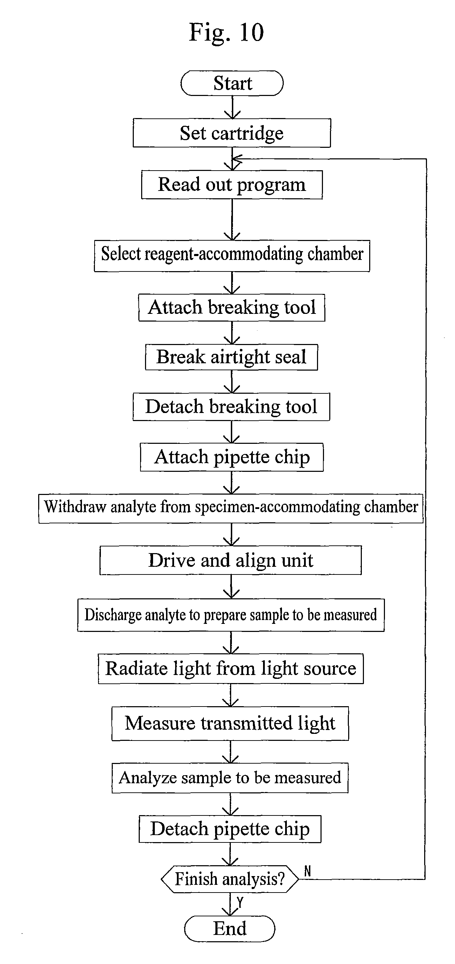

Next, an example of an analysis method using a cartridge and an automatic analysis device according to the present invention will be described with reference to Figure 10. For example, as a plurality of cartridges 4 including specimen-accommodating chambers 26 accommodating analytes are mounted onto the automatic analysis device 52 by the user, first, identification information recorded in the identifier 29 of the first cartridge 4 is read out. The identifier 29 records information on a series of operational processes of the automatic analysis device including mixing the test specimen with a reagent, analysis thereof and output of the results. The central control unit 68 reads out a processing program 78a of the cartridge 4 from ROM 78 based on the information of the identifier 29, and loads the read out processing program 78a into RAM 76 to initiate the first analysis.

Depending on the analyzed matter selected by the user, a reagent used for the analysis is selected among the reagents accommodated in the cartridge 4. Following selection of the reagent, the multi-unit 64 is driven along the transfer guide 65 to attach the seal-breaking tool 18 to the nozzle 45.

Moreover, the display 30 of the cartridge 4 indicates information relating to the reagent for designating the chamber that gives the highest measurement effect to be used for photometry of the transmitted light. The user may also manually designate the chamber for measuring the transmitted light based on the reagent information indicated on the display 30.

The nozzle 45 attached with the seal-breaking tool 18 is moved toward the reagent-accommodating chamber accommodating the selected reagent, whereby the airtight seal 4b is broken by the seal-breaking tool 18.

After breaking the airtight seal, the seal-breaking tool 18 is detached from the nozzle 45, and the pipette chip 17 is attached instead. Following attachment of the chip, the controller 60 moves the multi-unit 64 along the transfer guide 65 such that the nozzle 45 is positioned above the specimen-accommodating chamber accommodating the specimen. After the alignment of the multi-unit 64, the nozzle 45 descends toward the specimen-accommodating chamber to withdraw the specimen.

Once the specimen is withdrawn, the nozzle 45 ascends and the multi-unit 64 moves along the transfer guide 65. According to the processing program 78a, the reagent-accommodating chamber accommodating the reagent used this time is selected among the plurality of reagent-accommodating chambers accommodating reagents, and the multi-unit 64 is moved toward the selected reagent-accommodating chamber.

The multi-unit 64 is positioned such that the nozzle 45 is positioned above the selected reagent-accommodating chamber, and then the nozzle 45 descends to discharge the specimen in the nozzle 45 into the reagent-accommodating chamber for mixing. Mixing between the reagent and the specimen can be carried out by pumping. Thus, a sample to be measured, i.e., a mixture of the specimen and the reagent, is prepared in the reagent-accommodating chamber.

Following preparation of the sample to be measured, the light source 47 is controlled to turn on to radiate light to the sample to be measured in the reagent-accommodating chamber. Light that transmitted through the sample to be measured is dispersed by the spectroscopic element and the dispersed light, in turn, is subjected to photometry by the photometry mechanism 37. The signal processor 90 generates data of the measured intensity based on the measured intensity signal sent from the light-sensitive sensor 105 of the photometry mechanism 37 and the analysis section 85 analyzes absorbance or turbidity of the target substance contained in the sample to be measured based on the measured intensity data.

If there are a row of multiple cartridges 4, at the end of the analysis in the first cartridge 4, the multi-unit 64 transfers to the second cartridge 4 that is provided, for example, next to the first cartridge 4 to initiate second analysis.

Once the second analysis is initiated, the identifier 29 of the second cartridge 4 is read to read out the processing program 78a from ROM 78. According to the analyzed matter, a reagent used for the second analysis is selected from the reagents accommodated in the cartridge 4. After the airtight seal 4b is broken by the seal-breaking tool 18 attached to the nozzle 45, the seal-breaking tool 18 of the nozzle 45 is replaced with the pipette chip 17.

The multi-unit 64 begins to move toward the specimen-accommodating chamber 26 of the first cartridge 4 and positioned such that the nozzle 45 is positioned above the specimen-accommodating chamber 26.

Once the nozzle 45 withdraws the specimen in the specimen-accommodating chamber 26, the multi-unit 64 moves toward the reagent-accommodating chamber used this time, thereby preparing a mixture of the specimen and the reagent, i.e., sample to be measured, in the reagent-accommodating chamber.

Following preparation of the sample to be measured, the light source 47 is controlled to turn on so as to irradiate the sample to be measured in the reagent-accommodating chamber with light for measuring absorbance. Light that transmitted through the sample to be measured is dispersed and subjected to photometry by the photometry mechanism 37. The target substance contained in the sample to be measured is analyzed based on the results from the photometry.

As can be appreciated from the above-described sequential procedures in the first and second cartridges 4, the automatic analysis device 52 is provided with the multi-unit 64 having an integrated unit including the preparation mechanism 36 with the nozzle 45, the light source 47, the filter 48 and the photometry mechanism 37 with the light receiving section 49. Accordingly, the multi-unit 64 can move in the alignment direction of the chambers accommodating samples to be measured to perform, for each of the chambers, a procedure from preparation of the sample to be measured through photometry. As a result, an automatic analysis device 52 can be provided that can sequentially handle a plurality of cartridges 4 and that requires smaller installation space.

In addition, in the cartridge 4 of the present invention, an optical path length used for photometry can be selected by selecting a chamber among the first to third reagent-accommodating chambers 31-33 having respective optical path lengths d1-d3. Thus, an appropriate optical path length can be used to analyze a sample to be measured.

Alternatively, absorbance of the same sample to be measured can be measured using the first to third reagent-accommodating chambers 31-33 having different optical path lengths d1-D3 so that, for example, an analytical range with respect to the concentration or the like can be expanded, so that a highly concentrated specimen can be analyzed, so that the amount of the specimen used can be reduced, and so that more accurate analysis can be realized.

Furthermore, by using all of the first to third reagent-accommodating chambers 31-33 with different optical path lengths, for example, a calibration curve can be generated or the photometry device can be calibrated.

For example, in order to generate a calibration curve, first, the user prepares a standard specimen whose concentration is already known.

The prepared standard specimen is placed in the specimen-accommodating chamber 26 of the cartridge 4, and then the cartridge 4 is set in the automatic analysis device 52.

After setting the cartridge 4, the automatic analysis device 52 initiates preparation of a sample to be measured. The first to third reagent-accommodating chambers 31-33 already contain, for example, the same amount of buffer. In each of these first to third reagent-accommodating chambers 31-33, the same amount of specimen is mixed to prepare standard solutions in the first to third reagent-accommodating chambers 31-33.

After preparing the standard solutions in the first to third reagent-accommodating chambers 31-33, the incident sites 31b-33b of the respective chambers 31-33 are sequentially irradiated with light for measuring absorbance.

Light passing through the standard solution in each of the chambers 31-33 and coming out from each of the outgoing sites 31c-33c is subjected to photometry and calculated for absorbance.

Here, the relationship "E = ecl" (E: absorbance, e: molar absorption coefficient, c: molar concentration, 1: optical path length) known as Lambert-Beer law is established. The calculated absorbance is proportional to the concentration of the light-absorbing substance in each of the chambers 31-33 and the optical path lengths d1-d3 of the chambers 31-33.

Based on this, a program for generating a calibration curve is stored in ROM 78 in advance. The central control unit 68 performs photometry for the prepared standard solution at each of the multiple optical path lengths. After the absorbance calculation, the central control unit 68 converts each absorbance into absorbance that has been measured for a plurality of standard solutions at different concentrations in a cuvette having the same optical path length. A calibration curve can be generated from the converted absorbance and the concentration of the standard solution.

Usually, in order to generate a calibration curve, a plurality of standard solutions at different concentrations need to be measured. By using a cartridge of the present invention comprising a plurality of chambers with different optical path lengths, however, a calibration curve can be generated with a standard solution of a single concentration prepared with the automatic analysis device, thereby improving convenience.

Moreover, when analyzing a specimen, there should be no problem as long as the absorbance is within an analytical range. In the case of measuring a specimen at a high concentration that gives absorbance beyond the analytical range, a sample-accommodating chamber with the shortest optical path length can be used for photometry so that measurement can be carried out without diluting the specimen.

Furthermore, a blank solution may be placed in each reagent-accommodating chamber in advance so that the photometry device mounted on the automatic analysis device can be calibrated.

In order to perform more accurate quantification, for example, in the case of using a precious specimen, the photometry device may be calibrated prior to photometry of the sample to be measured.

A cartridge of the present invention is provided with a plurality of chambers having different optical path lengths while a blank solution is prepacked in each chamber so as to measure the absorbance of the blank solutions in the plurality of chambers having different optical path lengths. Based on these measurement values, the photometry device can be calibrated, for example, with respect to correction of the photometry value.

Herein, although the cartridges illustrated in the above-described embodiments had chambers having different optical path lengths arranged in a line, the chambers having different optical path lengths may also be arranged in an arc or a circle. Even when the chambers of a cartridge are arranged in such a manner, more accurate calibration of the photometry mechanism and generation of a more accurate calibration curve can be realized.

**DESCRIPTION OF REFERENCE NUMERALS**

| | |
|---|---|
| 4 | Cartridge |
| 4a | Cartridge body |
| 31 | First reagent-accommodating chamber (transmitted-light measurement chamber) |
| 31b | Incident site |
| 31c | Outgoing site |
| 32 | Second reagent-accommodating chamber (transmitted-light measurement chamber) |
| 32b | Incident site |
| 32c | Outgoing site |
| 33 | Third reagent-accommodating chamber (transmitted-light measurement chamber) |
| 33b | Incident site |
| 33c | Outgoing site |
| 36 | Preparation mechanism |
| 37 | Photometry mechanism |
| 45 | Nozzle |
| 47 | Light source |
| 48 | Filter |
| 49 | Light receiving section |
| 52 | Automatic analysis device |
| 53 | Device body |
| 58 | Cartridge tray |
| 64 | Multi-unit |
| 68 | Central control unit |
| 78 | ROM |
| 85 | Analysis section |
| 93 | Readout section |

## Claims

1. A reagent accommodating/measuring cartridge for mixing and reacting a test specimen with a reagent and for measuring the reaction state thereof with the transmitted light, the cartridge comprising a plurality of transmitted-light measurement chambers with different optical path lengths.

2. The cartridge according to Claim 1, further comprising a specimen-accommodating chamber for accommodating a test specimen, a chip-accommodating chamber for accommodating a pipette chip and a tool-accommodating chamber for accommodating a seal-breaking tool.

3. The cartridge according to Claim 1 or 2, further comprising an identifier for recording information on operational processes including mixing the test specimen with the reagent through outputting measurement results

4. The cartridge according to any one of Claims 1 to 3, comprising means for displaying reagent information that designates a chamber that gives the highest measurement effect among the plurality of transmitted-light measurement chambers.

5. The cartridge according to any one of Claims 1 to 4, wherein at least one of the plurality of transmitted-light measurement chambers serves as a reservoir for the reagent or the test specimen.

6. The cartridge according to any one of Claims 1 to 5, wherein the transmitted-light measurement chamber has transmittance of 70% or higher in the range of 340-800 nm.

7. The cartridge according to any one of Claims 1 to 6, wherein the transmitted-light measurement chamber is made of cyclic polyolefin.

8. The cartridge according to any one of Claims 1 to 7, wherein a reagent is placed and sealed in at least one of the plurality of transmitted-light measurement chambers in advance.

9. The cartridge according to any one of Claims 3 to 8 wherein, among the specimen-accommodating chamber, the chip-accommodating chamber, the tool-accommodating chamber and the identifier, at least the identifier is covered with a seal.

10. The cartridge according to Claim 9, wherein the specimen-accommodating chamber, the chip-accommodating chamber, the tool-accommodating chamber and the identifier are covered with a seal.

11. An automatic analysis device mounted with the cartridge according to any one of Claims 1 to 10, the automatic analysis device comprising:
a nozzle having a pipette chip at the tip, for withdrawing the test specimen into the pipette chip and discharging the test specimen to dispense the test specimen into the reagent chamber;
a light source for radiating light to a mixture of the test specimen and the reagent; and
a detector for receiving the light from the light source through the mixture;
wherein the dispensing nozzle, the light source and the detector are integrally mounted on the same movable unit.

12. The automatic analysis device according to Claim 11, further comprising, in the same unit, a filter for adjusting the wavelength-intensity distribution of the light from the light source.

13. The automatic analysis device according to either one of Claims 11 and 12, wherein the withdrawal and discharge sites of the dispensing nozzle are positioned along the optical axis extending between the light source and the detector.

14. The automatic analysis device according to any one of Claims 11 to 13, wherein the automatic analysis device has a mechanism for dispersing the light received with the detector, and measuring the intensity of the dispersed light at each wavelength band independently.

15. The automatic analysis device according to any one of Claims 11 to 14 wherein the wavelength of the light for irradiating the mixture is 340 nm to 800 nm.

16. The automatic analysis device according to any one of Claims 11 to 16, comprising a mechanism for reading out the above-mentioned operational processes from the cartridge according to any one of Claims 3 to 10.

17. A cartridge comprising: a chamber for accommodating a tool for treating a test specimen and a reagent, and/or a chamber or a well for subjecting the test specimen and the reagent to a treatment; and an identifier for recording information on the procedure of the treatment, wherein at least the identifier is covered with a seal.

18. The cartridge according to Claim 17, wherein the chamber, the well and the identifier are covered with a seal.

19. A method for sealing the cartridge according to any one of Claims 3 to 8, comprising a step of covering at least the identifier with a seal.

20. A method for sealing a cartridge comprising: a chamber for accommodating a tool for treating a test specimen and a reagent, and/or a chamber or a well for subjecting the test specimen and the reagent to a treatment; and an identifier for recording information on the procedure of the treatment, the method comprising a step of covering at least the identifier with a seal.

21. The method according to Claim 20, wherein the chamber, the well and the identifier are covered with a seal.

22. A method for automatically analyzing a test specimen, comprising a step of installing the cartridge according to any one of Claims 1 to 10 into the automatic analysis device according to any one of Claims 11 to 16 to measure the test specimen contained in the cartridge.

23. A method for automatically analyzing a test specimen, comprising a step of installing the cartridge according to Claim 17 or 18 into the automatic analysis device for measuring a test specimen to measure the test specimen contained in the cartridge.
